# EUROPEAN PATENT APPLICATION

(11) **EP 1 923 260 A1**
(43) Date of publication of application: **21.05.2008**
(21) Application number: 07120654.4
(22) Date of filing: 14.11.2007
(51) Int. Cl.: B60P 3/22, B60P 3/025

(54) **Vehicle, system and method for distributing catering products**

(30) Priority: 14.11.2006 NL 1032862
(71) Applicant: Heineken Supply Chain B.V., 1017 ZD Amsterdam (NL)
(72) Inventor: Foppen, Hendrik Jan, 8033 DB Zwolle (NL)
(74) Representative: Hatzmann, Martin

(57) **Abstract**

A vehicle (1) for distribution of catering products, comprising a loading space (3) in which at least one storage container (4) for beverage is provided, as well as a set-up place (5) for further catering products (6), wherein a delivery hose (12) is provided which is coupled or can be coupled to the storage container (4) and is received or can be received in a storage provision, wherein cooling means (18) are provided for cooling the storage container (4) and/or beverage received therein and for cooling the delivery hose (12) in the storage provision.

## Description

The invention relates to a vehicle, system and method for the distribution of catering products.

For the distribution of catering products, in particular beverage such as beer, different types of vehicles are used. Thus, for instance, refrigerated trucks are used for distributing perishables, tankers are used for the distribution of beer to cellar beer installations, and trucks are used for distribution of for instance barrels and crates of beverage.

Cellar beer installations comprise a tank having generally a bag therein in which beverage can be received, which can be delivered to, for instance, a draught tap on a bar by pressurizing the bag in the tank. Such tanks have for instance a content of 500 or 1,000 liters and are filled from a tanker especially developed for that purpose. To this end, the tanker, which has a content of for instance 7,000 to more than 25,000 liters, is provided with a delivery hose which can be rolled out or folded out and at one end can be coupled with the tank of the tanker and at the other end with the tank which is set up, for instance, in the cellar of a catering establishment. To that end, a coupling piece with a shutoff-valve is provided, which can be coupled with an inlet and outlet of the tank, to which coupling piece the delivery hose is connected, whereafter beverage is introduced via the delivery hose and the coupling piece into the tank. Prior to placement of the coupling piece, another, identical coupling piece is removed from the tank. This removed coupling piece is carried off with the tanker, for instance to clean it in the brewery. This means that the tanker needs to bring along a series of clean coupling pieces at least corresponding to the number of tanks that can be filled from the tanker.

A disadvantage of these cellar beer installations and the tankers used therewith is that the tankers are large and heavy, so that they cannot, or can only with great effort, be brought near tanks in catering establishments, which renders a cellar beer installation unsuitable for catering establishments on premises that are relatively difficult to access.

Furthermore, a disadvantage is that a tanker is unsuitable to transport other catering products than beverage in bulk.

An object of the invention is to provide a vehicle for distribution of catering products, in particular different types of catering products, such as barrels and crates, more particularly also beverage for cellar beer installations.

Another object of the invention is to provide a system for distribution of catering products.

A further object of the invention is to provide a method for the distribution of catering products.

In a first aspect, a vehicle according to the invention is characterized in that a loading space is provided in which at least one storage container for beverage is provided, as well as a set-up place for further catering products, wherein a delivery hose is provided which is coupled or can be coupled to the storage container and is received or can be received in a storage provision, wherein cooling means are provided for cooling of the storage container and/or beverage received therein and for cooling of the delivery hose in the storage provision.

By cooling both the beverage and the delivery hose in stored condition, bacterial problems are reduced or even eliminated, so that different tanks can be filled in succession in a faster and simpler manner, also at different delivery points situated at a relatively great distance from each other. By providing both a storage container for beverage, with which tanks of cellar beer installations can be filled, and a set-up place for further catering products such as barrels and crates, different types of catering products can be distributed in an efficient manner. Thus, for instance, catering products can be loaded and unloaded while a tank of a cellar beer installation is being filled.

Preferably, the vehicle is provided with a cleaning device for cleaning a coupling piece, in particular during travel of the vehicle between delivery points, so that when a tank is to be filled there is always a clean coupling piece available, which can be exchanged for a coupling piece already present on the tank.

In a second aspect, the invention is characterized in that the vehicle has an unladen weight of less than 3,5 tons and/or a wheelbase of less than 4,500 mm and/or a loading capacity of 17,5 cubic meters at a maximum. Such a vehicle can for instance be designed as a van.

In a further aspect, the invention is characterized by a relatively small vehicle with a loading capacity between 2 and 4 tons.

Such a vehicle provides the advantage of rendering catering establishments accessible in a relatively simple manner in places where large tankers cannot go, thus making cellar beer installations available for more catering establishments. Moreover, with a vehicle according to the invention, catering products can be distributed in combination, with less nuisance to the surroundings of the catering establishments, while moreover also relatively small catering establishments can be serviced relatively simply in this way.

In a third aspect, the invention is characterized in that a system is provided which comprises a vehicle according to the invention and at least one tank, wherein the at least one tank is set up in a building and is provided with a coupling element for coupling with a coupling piece through which the tank can be filled and emptied, wherein a coupling piece is provided for coupling the delivery hose with the coupling element, wherein at least one coupling piece more than the number of tanks is provided, such that in each case at least one coupling piece can be cleaned while a tank is being filled from the storage container.

In such a system, in each case a coupling piece can be cleaned while another coupling piece is being used for filling a tank and/or delivering beverage from a tank, so that a series of tanks can be filled in a highly efficient manner, with a minimal number of coupling pieces.

In a fourth aspect, the invention is characterized by a method for the distribution of catering products, among which beverage, wherein preferably a vehicle is used with a loading space in which at least one storage container for beverage is provided, wherein cooling means are provided for cooling the storage container and/or beverage received therein, wherein a delivery hose is provided which is or is to be coupled with the storage container and is received or can be received in a storage provision, wherein cooling means are provided for cooling the delivery hose in the storage provision, wherein the vehicle is set up at a delivery point with a tank, and the delivery hose is taken at least partly from the storage provision, whereafter the tank is at least partly filled with beverage from the storage container, wherein prior to filling of the tank with beverage a first coupling piece is taken from the tank and is replaced by a second coupling piece, whereupon the delivery hose is coupled with the second coupling piece, and the tank is at least partly filled through the delivery hose and the second coupling piece, whereafter at least the delivery hose is detached from the second coupling piece, while the first coupling piece is placed in the vehicle in a cleaning device and is cleaned therein, whereafter the first coupling piece is used as second coupling piece at a further tank.

Such a method enables in a particularly simple and efficient manner distribution of beverage, and preferably also of other catering products.

Preferably, use is made of a tanker with a relatively large capacity set up centrally, at least at a first set-up place, and a series of smaller vehicles each with a storage container having a smaller capacity, while the storage containers of the vehicles are filled from the tanker, and tanks of for instance cellar beer installations are filled from the storage containers. In this way, distribution is simplified.

In a system according to the invention, cellar beer installations can be used with any desired content, for instance with tanks between 100 and 1,000 liters or more. It is especially preferred to use cellar beer installations with tanks having a content between for instance 100 and 1,000 liters, more particularly between 100 and 500 liters.

In the subclaims, further advantageous embodiments of the invention are given. To clarify the invention, embodiments of the invention will be further elucidated with reference to the drawing. In the drawing:
Fig. 1 shows in side elevation a vehicle according to the invention in a first embodiment;
Fig. 2 shows in side elevation a vehicle according to the invention in a second embodiment;
Fig. 3 schematically shows a coupling piece, coupled between a tank and a delivery hose; and
Fig. 4 schematically shows a system according to the invention, with a tanker and a series of vehicles with storage containers.

In this description, equal or corresponding parts have equal or corresponding reference numerals. The embodiments shown and described here are shown only by way of illustration and should not be construed as being limitative in any way. Many variations thereon are possible, such as for instance, without being limited thereto, parts of or combinations of parts of the embodiments shown.

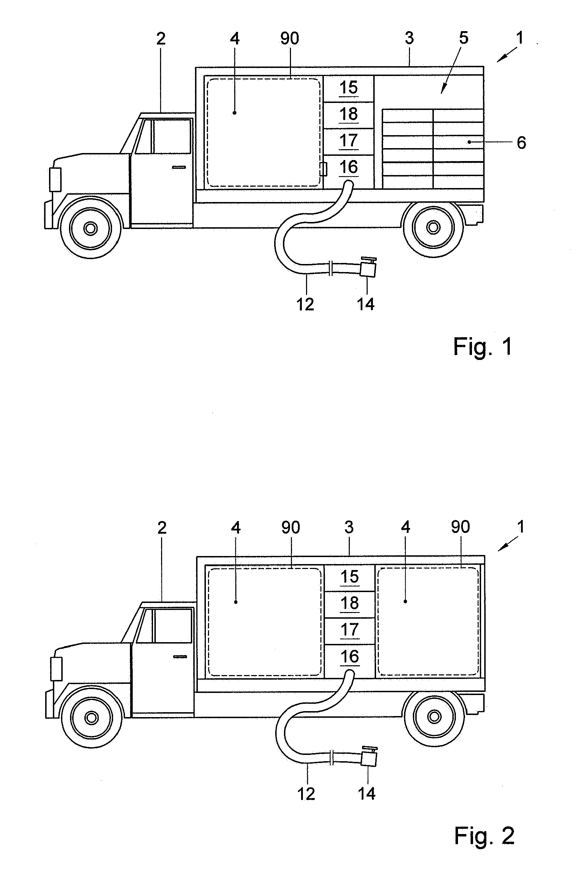

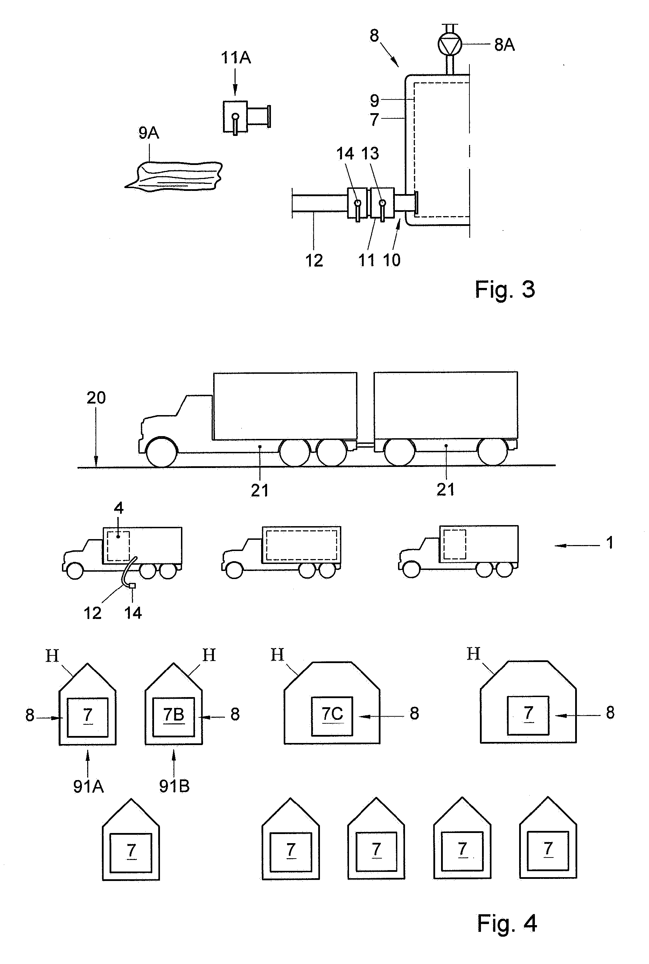

Fig. 1 schematically shows in side elevation a vehicle 1 provided with a cabin 2 and a loading space 3, which loading space 3 comprises a storage container 4 for beverage and a set-up place 5 for other catering products 6 such as crates, barrels, boxes and the like with beverage and/or comestibles, glasses and the like. The beverage from the storage container 4 is intended for filling a tank 7 (Figs. 3 and 4) of a cellar beer installation 8. A cellar beer installation 8 comprises a tank 7 generally having therein a bag or like flexible inner container 9, in which the beverage, in particular beer, can be received in order to be delivered under pressure into a tapping device. Pressure is obtained for instance through a compressor 8A, in a known manner. The tank shown and described here has for instance a content of between 100 and 1,000 liters, more particularly between 100 and 500 liters, for instance 250 liters, so that it is suitable for a relatively small to medium-size catering establishment as regards trade volume of the beverage in question, such as beer. Naturally, multiple tanks may be provided at a delivery point such as a catering establishment.

The tank 7 is provided with an opening 10 to which a coupling piece 11 can be coupled, via a coupling element such as a bayonet catch or the like, to which coupling piece 11 a delivery hose 12 is connectible, which hose 12 is connected by the opposite end thereof with the storage container 4 of the vehicle 1. In the coupling piece 11, a first shutoff-valve 13 is provided, while the free end of the delivery hose 12 is provided with a second shutoff-valve 14. By opening the two shutoff-valves 13, 14, beverage can be introduced through the delivery hose into the tank 7, by pressurizing the storage container 4, for instance with air which is introduced under pressure into the storage container 4. To that end, the storage container 4 is preferably designed as a bag-in-container (BIC), hence with an exchangeable, flexible inner bag 90 comparable to the tank 7 as described, so that the beverage does not come into contact with the air or other pressure gas or fluid. To that end, the vehicle is preferably provided with a compressor 15 or other pressure-generating device. In Fig. 3 the coupled condition is shown.

After the tank 7 has been filled with beverage, the delivery hose 12 is uncoupled from the coupling piece 11, after the shutoff-valves 13, 14 have been closed, whereafter a coupling of a tapping installation (not shown) of the catering establishment H is connected and the first shutoff-valve is opened. Then beverage can be delivered from the tank 7. For instance during the filling of the tank, other catering products can be loaded into and unloaded from the vehicle 1, in order to make optimum use of the available time.

Prior to the connection of the delivery hose 12 and the first coupling piece 11 to the tank 7, first a used coupling piece 11A is detached from the tank 7 and a used bag 9A is removed therefrom. The bag 9A is thrown away or taken along for recycling, while a new, clean bag 9 is placed. The used coupling piece 11A is carried along with the delivery hose 12 back to the vehicle 1, where the delivery hose 12 is stored in a storage provision 16, preferably in its entirety, while the used coupling piece 11A is placed in a cleaning device 17, for instance a bath with cleaning liquid, which may or may not be provided with means for mechanical cleaning. Cooling of the delivery hose 12 in the storage provision with the aid of cooling means 18, for instance the same cooling means with which the beverage in the storage container 4 is cooled, prevents beverage quality being adversely affected, largely or wholly prevents for instance bacterial growth or other unwanted microbiological growth in the hose or at connections thereof, and even beverage may be left in the hose when it is placed in the storage provision 16 and is cooled therein. As a result, no beverage is lost.

The vehicle can then be driven to a second delivery point 91B, where a further tank 7B can be filled in a manner described earlier, after a new bag 9B has been placed. The coupling piece 11A cleaned, for instance, during travel of the vehicle can then be used instead of a coupling piece used previously on the tank, which latter coupling piece in turn can be taken along to be cleaned in the cleaning device, for use with a next tank 7C. Preferably, there is always at least one coupling piece 11 more than the number of tanks that is to be filled with the respective vehicle.

In Fig. 2, an alternative embodiment of a vehicle 1 according to the invention is shown, where two storage containers 4 are received in the loading space 3. The loading space is again cooled, while at least one delivery hose 12 is provided which can be stored in the loading space proper, serving as storage provision 16. Optionally, a limited space may be provided for other catering products 6, but that is not requisite. The storage containers 4, a different number of which may be provided, can be filled with the same or different beverages.

Fig. 4 schematically shows a system where at a set-up place 20 a tanker 21 is placed having a relatively large content, for instance more than 30,000 liters. The capacity of the tanker may be that of a known tanker with maximum loading capacity, for instance more than 100,000 liters. A series of vehicles 1, for instance as described earlier, are provided, each with a storage container and a delivery hose. The storage containers of the vehicles 1 are filled from the tanker 21, whereafter they are driven to different delivery points 91A, 91B, 91C, 91D, 91E, 91F, 91G and 91I to deliver at least a part of the beverage from the respective storage container into a tank 7 set up there, as described earlier. If the storage container of a vehicle is empty, the vehicle will drive back to the tanker to be refilled. In this way, distribution is further simplified, especially in an area with multiple catering establishments H that need to be supplied, and especially in an area with for instance narrow streets, access limitations on truck traffic or involving other circumstances where smaller vehicles are desirable.

It will be clear that the delivery hose of a vehicle is preferably relatively long, for instance longer than the vehicle 1, and pliable, so that it can easily be carried into for instance a cellar of a catering establishment and can be simply stored in a storage provision. The invention is particularly suitable for the distribution of beer in the above-mentioned storage containers, for cellar beer installations, but can also be used for other beverages. Cellar beer installation should herein be understood to be an apparatus with at least one tank having a relatively large volume, which is substantially immovably arranged and, with the aid of a vehicle, is filled periodically or on demand with beverage which in turn can be dispensed via a tapping device in a catering establishment. A tank, or the tank, may also be set up in a space other than a cellar, for instance in a bar or restaurant, a cold store or other suitable space. A storage provision can for instance be a cool box, which may or may not be actively cooled, and may be provided, for instance, with a reel for giving out and taking in the delivery hose.

The invention is not limited in any way to the embodiments given in the drawing and description. Many variations thereon are possible. Thus, the vehicle may be provided with drive means and a cabin, but may also be, or comprise, a trailer. Other means may be provided for conveying the beverage to a tank, such as for instance pumping means. Tanks may be filled from a single vehicle but in case of a larger capacity, storage containers of multiple vehicles may be emptied into the same tank. Different dimensions and shapes of vehicles can be used within the invention as described in the appended claims.

## Claims

1. A vehicle for distribution of catering products, comprising a loading space in which at least one storage container for beverage is provided, as well as a set-up place for further catering products, wherein a delivery hose is provided which is coupled or can be coupled with the storage container and is received or can be received in a storage provision, wherein cooling means are provided for cooling the storage container and/or beverage received therein and for cooling the delivery hose in the storage provision.

2. A vehicle according to claim 1, wherein the delivery hose can at least partly be rolled up in the storage provision.

3. A vehicle according to claim 1 or 2, wherein the delivery hose, at an end remote from the storage container, is provided with a shutoff-valve.

4. A vehicle according to any one of the preceding claims, wherein the delivery hose, in a condition filled at least partly with beverage, is at least largely receivable in the storage provision.

5. A vehicle according to any one of the preceding claims, wherein furthermore at least one cleaning device is provided for cleaning a coupling piece which can be coupled with the delivery hose at an end remote from the storage container.

6. A vehicle according to any one of the preceding claims, wherein the storage container has a volume between 200 and 10,000 liters, preferably between 300 and 5,000 liters, and more particularly a volume between 500 and 2,500 liters.

7. A vehicle according to any one of the preceding claims, wherein the storage container takes up less than two-thirds of the volume of the loading space, preferably at most a half thereof.

8. A vehicle according to any one of the preceding claims, wherein cooling means are provided for the whole loading space.

9. A vehicle according to any one of the preceding claims, wherein the vehicle has a weight of less than 3,5 tons and/or a wheelbase of less than 4,500 mm and/or a loading capacity of at most 17,5 cubic meters.

10. A vehicle according to any one of the preceding claims, wherein the delivery hose has a length that is greater than that of the vehicle.

11. A system of a vehicle, in particular according to any one of the preceding claims, and at least one tank, wherein the at least one tank is set up in a building and is provided with a coupling element for coupling with a coupling piece through which the tank can be filled and emptied, wherein a coupling piece is provided for coupling the delivery hose with the coupling element, wherein at least one coupling piece more than the number of tanks is provided, such that always at least one coupling piece can be cleaned while a tank is being filled from the storage container.

12. A system according to claim 11, wherein a series of tanks are provided in different buildings.

13. A system according to claim 11 or 12, wherein at least one vehicle is provided and furthermore a tanker is provided, having a capacity which is a multiple of the capacity of the storage container on the at least one vehicle.

14. A method for the distribution of catering products, among which beverage, wherein a vehicle is used with a loading space in which at least one storage container for beverage is provided, wherein cooling means are provided for cooling the storage container and/or beverage received therein, wherein a delivery hose is provided which is or is to be coupled to the storage container and is received or can be received in a storage provision, wherein cooling means are provided for cooling the delivery hose in the storage provision, wherein the vehicle is set up at a delivery point with a tank, and the delivery hose is at least partly taken from the storage provision, whereafter the tank is at least partly filled with beverage from the storage container, wherein prior to filling of the tank with beverage, a first coupling piece is taken from the tank and is replaced with a second coupling piece, whereafter the delivery hose is coupled to the second coupling piece and the tank is at least partly filled through the delivery hose and the second coupling piece, whereafter at least the delivery hose is detached from the second coupling piece, wherein the first coupling piece is placed in the vehicle in a cleaning device and is cleaned therein, whereafter the first coupling piece is used as second coupling piece at a further tank.

15. A method according to claim 14, wherein a vehicle according to any one of claims 1-10 is used.

16. A method according to claim 14 or 15, wherein a tanker is set up at a first position, whereafter a series of vehicles with a storage container are driven to said tanker, whereafter the storage container of the or each respective vehicle is filled at least partly with beverage from the tanker, whereafter the or each respective vehicle is driven to a delivery point situated at a distance from the first position for at least partly filling a tank from the respective storage container.

17. Use of a vehicle according to any one of claims 1-10 for the distribution of beverage and other catering products.
